# EUROPÄISCHE PATENTSCHRIFT

(11) **EP 3 276 916 B1**
(45) Veröffentlichungstag und Bekanntmachung des Hinweises auf die Patenterteilung: **25.07.2018**
(21) Anmeldenummer: 16181896.8
(22) Anmeldetag: 29.07.2016
(51) Int. Cl.: H04L 29/08, H04W 4/00, H04W 8/24

(54) **VERFAHREN UND KOMMUNIKATIONSNETZWERK MIT EINER MEHRZAHL VON SUBNETZWERKEN ZUM AUSFÜHREN EINER ELEKTRONISCHEN ANWENDUNG**
METHOD AND COMMUNICATION NETWORK WITH A PLURALITY OF SUBNETWORKS FOR CARRYING OUT AN ELECTRONIC APPLICATION
PROCEDE DE RESEAU DE COMMUNICATION A L'AIDE D'UNE PLURALITE DE RESEAUX SECONDAIRES DESTINES A EXECUTER UNE APPLICATION ELECTRONIQUE

(43) Veröffentlichungstag der Anmeldung: 31.01.2018
(73) Patentinhaber: Deutsche Telekom AG, 53113 Bonn (DE)
(72) Erfinder: EINSIEDLER, Hans Joachim, 13189 Berlin (DE); HÄNSGE, Kay, 10785 Berlin (DE); SZCZEPANSKI, Roman, 10713 Berlin (DE)
(74) Vertreter: Patentship Patentanwaltsgesellschaft mbH

(56) Entgegenhaltungen:
- EP-A1- 2 053 504
- US-A1- 2015 358 399
- "NGMN_5G_White_Paper_V1_0", ETSI DRAFT; NGMN_5G_WHITE_PAPER_V1_0, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M - Open, 25 June 2015 (2015-06-25), pages 1-125, XP014258882, [retrieved on 2015-06-25]

## Beschreibung

Die vorliegende Erfindung betrifft ein Kommunikationsnetzwerk mit einer Mehrzahl von Subnetzwerken, insbesondere ein 5G-Kommunikationsnetzwerk mit mehreren Slices, wobei ein erstes Subnetzwerk eine Ausführungsentität zum Ausführen einer elektronischen Anwendung mit einem Echtzeitprozess umfasst. Die Erfindung betrifft ferner ein Verfahren zum Ausführen der elektronischen Anwendung durch eine Ausführungsentität eines Subnetzwerkes, insbesondere durch ein mobiles Endgerät, das als Ausführungsentität in das Subnetzwerk eingebunden ist.

Viele Echtzeitanwendungen bzw. Prozesse von mobilen Kommunikationsgeräten oder mobilen Endgeräten wie beispielsweise "Augmented Reality" bzw. "Erweiterte Realität" oder Autonomes Fahren (Steuerung) werden üblicherweise im Kommunikationsnetz prozessiert, da das Netz eine größere Menge an Ressourcen bereitstellt als dem einzelnen Endgerät zur Verfügung stehen. Das Ergebnis dieses Prozessierens wird zum mobilen Endgerät hin übertragen und dort beispielsweise angezeigt oder weiter verwendet.

Allerdings kommt es hier bedingt durch die Struktur und Auslastung des Kommunikationsnetzes zu teilweise größeren zeitlichen Verzögerungen bis die Ergebnisse zum mobilen Endgerät übertragen sind und der Benutzer seinen Prozess fortsetzen kann. Viele dieser genannten Prozesse (Augmented Reality und Autonomes Fahren) sind zeitkritisch und können unter Umständen nicht in entsprechender Zeit durch das Netz ausgeführt werden. Damit kommt es zu unerwünschten Aussetzern oder Verzögerungen im Prozessablauf, die bei gewissen Echtzeitprozessen kritisch sind.

Die Druckschrift EP 2 053 504 A1 beschreibt ein System und Verfahren zum Verwalten von Prozessressourcen, insbesondere zum Zugriff und Update von Firmware, Softwarekomponenten und Anwendungsfiles auf mobilen Terminals.

Die Druckschrift US 2015 / 358399 A1 beschreibt ein Verfahren zum Bereitstellen und Verwalten von Slices einer CPE (Customer Premises Equipment) Einrichtung.

Die Druckschrift "NGMN_5G_White_Paper_V1_0", ETSI DRAFT, European Telecommunications Standards Institute (ETSI), 650, Route des Lucioles; F-06921 Sophia-Antipolis; France, Bd. SmartM2M - Open, 25. Juni 2015 (2015-06-25), Seiten 1-125, betrifft einen ETSI Standard für das mobile Netzwerk der nächsten Generation, NGMN.

Es ist die Aufgabe der vorliegenden Erfindung, ein Konzept zu schaffen, bei dem zeitkritische Prozesse zeiteffizient mit Netzwerkunterstützung ausgeführt werden können.

Diese Aufgabe wird durch die Merkmale der unabhängigen Ansprüche gelöst. Vorteilhafte Weiterbildungsformen sind Gegenstand der abhängigen Ansprüche.

Die Erfindung beruht auf der Grundidee, Ressourcen eines Kommunikationsnetzes der fünften Generation (5G) flexibel zu nutzen, um die zeitkritischen Prozesse mit Netzwerkunterstützung zeiteffizient auszuführen. Das mobile Endgerät wird für Echtzeit-Anwendungen als virtueller Knoten in eine oder in mehrere Slices verlagert. Dadurch können die Ressourcen des virtuellen Knotens für die Echtzeitanwendung verwendet werden und stehen unmittelbar dem mobilen Endgerät zur Verfügung. Damit lassen sich zeitkritische Anwendungen, wie beispielsweise (verzögerungsreduzierte) Augmented Reality, Fahrzeugsteuerung bei Fahrzeugen, insbesondere bei autonomem Fahren, Life Science Anwendungen wie beispielsweise Auswertung von Körpersensorwerten zur Krankheitsdiagnose oder für Trainingsoptimierung, u.v.a.m. zeiteffizient ausführen. Ein weiterer Vorteil ist die Mobilität, denn der Aufenthaltsort des mobilen Endgerätes ist immer bekannt. Dadurch wird für Echtzeitanwendungen ein mobiler Endknoten bereitgestellt.

Die fünfte Generation der mobilen Technologie (5G) betrifft die Anforderungen und technischen Herausforderungen der künftigen Kommunikationsnetze ab etwa dem Jahr 2020 und darüber hinaus. In 5G werden neue Funkschnittstellen eingesetzt, um den Anforderungen an die Nutzung höherer Frequenzen gerecht zu werden, beispielsweise für neue Anwendungen wie Internet der Dinge (loT). Dabei wird 5G als ein Ende-zu-Ende System betrachtet, das sämtliche Netzwerkaspekte beinhaltet mit einem Design, das einen hohen Grad an Konvergenz ermöglicht.

5G operiert in einer stark heterogenen Umgebung, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen können optimal unterstützt werden, z.B. ausfallsichere, robuste Kommunikation, Kommunikation mit geringen Datenraten oder breitbandige Kommunikation in dicht besiedelten Raumen. In solch einer Umgebung erfüllt 5G ein nahtloses und konsistentes Nutzererlebnis über Zeit und Raum. Der Betreiber eines 5G Kommunikationsnetzes kann die eingesetzten Ressourcen optimal und dynamisch an die jeweiligen Anforderungen anpassen, um die Vielzahl an Anwendungen gleichzeitig unterstützen zu können.

5G erlaubt es, die Leistungsfähigkeit der Kommunikation zu steigern, und stellt insbesondere einen höheren Datendurchsatz, eine geringere Verzögerung, eine besonders hohe Zuverlässigkeit, eine weitaus höhere Verbindungsdichte und einen größeren Mobilitätsbereich bereit, zum anderen erlaubt es aber auch die Flexibilität im Betrieb zu erhöhen und maßgeschneiderte Funktionen mit dem geringstmöglichen Einsatz von Mitteln bereitzustellen. Diese erhöhte Leistungsfähigkeit geht zusammen mit der Fähigkeit zur Steuerung stark heterogener Umgebungen und der Fähigkeit zur Sicherung von Vertrauen, Identität und Privatsphäre der Nutzer.

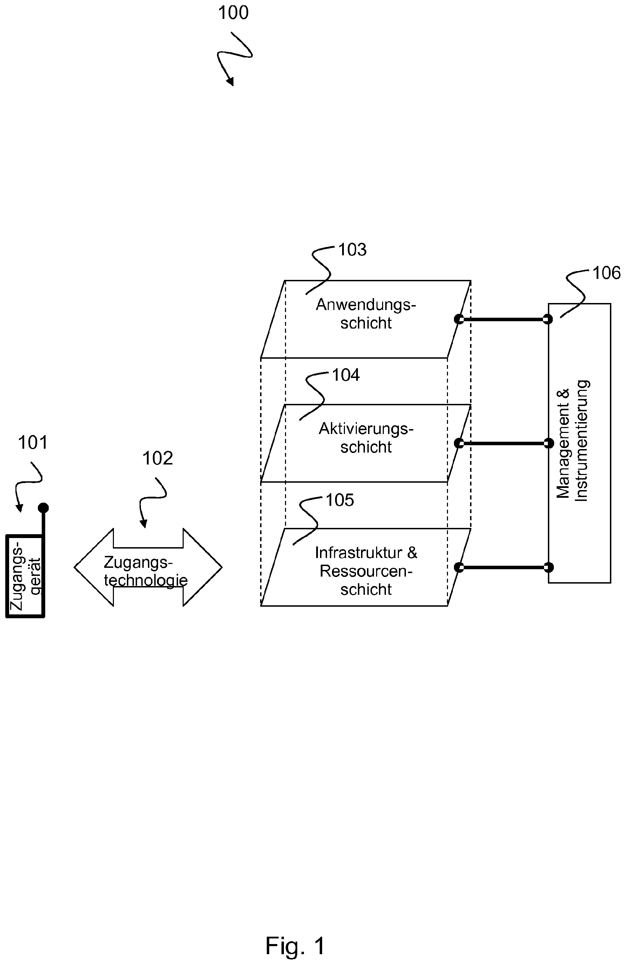

Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

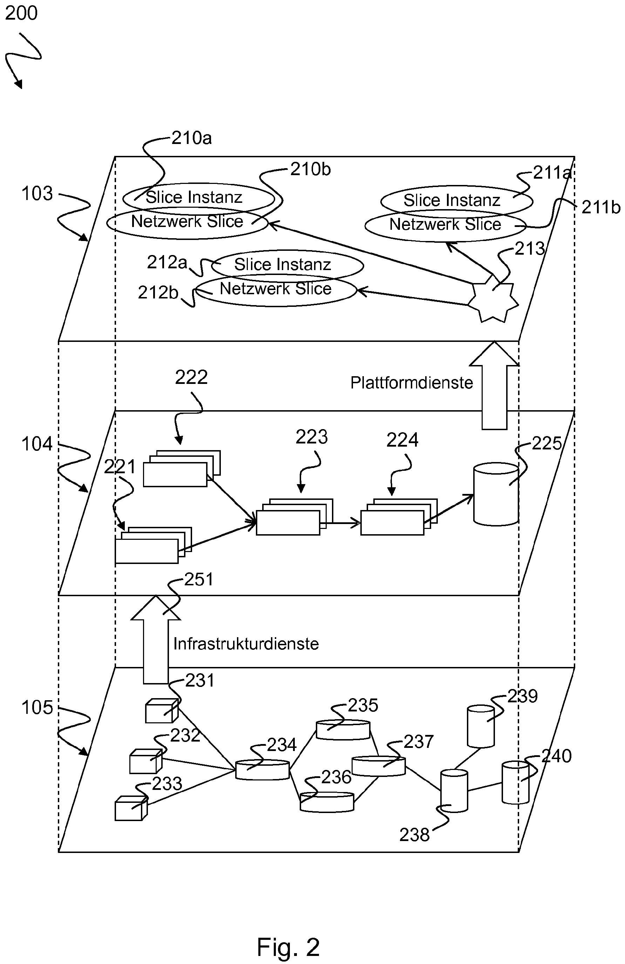

Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfassen kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instandhalten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet, unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Gemäß einem ersten Aspekt betrifft die Erfindung ein Verfahren zum Ausführen einer zeitkritischen elektronischen Anwendung durch einen Slice eines 5G Kommunikationsnetzwerks mit einer Mehrzahl von Slices sowie einem mobilen Endgerät, wobei die zeitkritische elektronische Anwendung einen Echtzeitprozess aufweist, der innerhalb einer vorgegebenen Zeit ausgeführt werden muss, mit: Auswählen eines Slice eines 5G Kommunikationsnetzwerks zum Ausführen der zeitkritischen elektronischen Anwendung; Empfangen einer Anfrage nach einer Ausführung der zeitkritischen elektronischen Anwendung durch eine Serverentität des Slice von dem mobilen Endgerät; Einbinden des mobilen Endgerätes als eine Ausführungsentität in den Slice des 5G Kommunikationsnetzwerks durch die Serverentität; Übertragen eines Ausführungscodes zum Ausführen des Echtzeitprozesses durch die Serverentität an das mobile Endgerät; Ausführen des Ausführungscodes durch das mobile Endgerät, um den Echtzeitprozess auf dem mobilen Endgerät auszuführen; und Bereitstellen eines Ergebnisses der Ausführung des Echtzeitprozesses an das mobile Endgerät.

Damit ist der Vorteil verbunden, dass das mobile Endgerät für Echtzeit-Anwendungen als virtueller Knoten (Ausführungsentität) in eine oder in mehrere Slices verlagert werden kann. Dadurch können die Ressourcen des virtuellen Knotens für die Echtzeitanwendung verwendet werden und stehen unmittelbar dem mobilen Endgerät zur Verfügung. Das mobile Endgerät ist in den Slice eingebunden, so dass keine zeitkritische Datenübertragung von extern nach intern oder umgekehrt mehr erfolgen muss. Die elektronische Anwendung kann damit zeiteffizienter, d.h. schneller ausgeführt werden, so dass der Echtzeitprozess seine Zeitanforderungen erfüllen kann.

Gemäß einer Ausführungsform umfasst das Verfahren ein Allokieren von Ressourcen des Slice zur Ausführung der elektronischen Anwendung durch die Serverentität des Slice.

Damit ist der Vorteil verbunden, dass der Echtzeitprozess, falls erforderlich, auf sämtliche Ressourcen des Slice zurückgreifen kann um damit seine Kommunikationsaufgaben schneller ausführen zu können.

Gemäß einer Ausführungsform des Verfahrens umfasst die Anfrage nach der Ausführung der elektronischen Anwendung eine Zeitangabe, die angibt bis wann der Echtzeitprozess auf dem mobilen Kommunikationsgerät ausgeführt sein muss.

Damit ist der Vorteil verbunden, dass der Slice darüber informiert wird, welche Zeitanforderungen für den Echtzeitprozess bestehen und somit eine effiziente Ausnutzung der Kommunikationsressourcen möglich wird.

Gemäß einer Ausführungsform des Verfahrens erfolgt das Allokieren von Ressourcen des Slice abhängig von der Zeitangabe.

Damit ist der Vorteil verbunden, dass der Slice die Kommunikationsressourcen maßgeschneidert zur Verfügung stellen kann. Damit wird eine effiziente Ausnutzung der Kommunikationsressourcen möglich.

Gemäß einer Ausführungsform umfasst das Verfahren ein Allokieren von Ressourcen des Slice durch das mobile Endgerät zum Ausführen des Echtzeitprozesses auf dem mobilen Endgerät unter Nutzung der allokierten Ressourcen des Slice.

Damit ist der Vorteil verbunden, dass das mobile Endgerät direkt auf die Bereitstellung bzw. Allokation der Ressourcen des Slice zugreifen kann und die gesamte Steuerung überwachen kann. Hier kann das mobile Endgerät Master für die Ausführung der elektronischen Anwendung sein.

Gemäß einer Ausführungsform umfasst das Verfahren ein Allokieren von Ressourcen des mobilen Endgeräts durch das mobile Endgerät zum Ausführen des Echtzeitprozesses auf dem mobilen Endgerät unter Nutzung der allokierten Ressourcen des mobilen Endgeräts und der allokierten Ressourcen des Slice.

Damit ist der Vorteil verbunden, dass das mobile Endgerät eine Vielzahl von Ressourcen nutzen kann, seien es mehr anwenderorientierte Ressourcen des mobilen Endgeräts, wie beispielsweise Display oder mehr netzwerkseitige Ressourcen des Slice wie Server mit hoher Rechenleistung.

Gemäß einer Ausführungsform umfasst das Verfahren ein Vernetzen der allokierten Ressourcen des mobilen Endgeräts mit den allokierten Ressourcen des Slice zum Ausführen des Echtzeitprozesses auf dem mobilen Endgerät.

Damit ist der Vorteil verbunden, dass durch die Vernetzung der Ressourcen eine Leistungssteigerung sowie Synergieeffekte erzielt werden können.

Gemäß einer Ausführungsform des Verfahrens umfasst der Ausführungscode zum Ausführen des Echtzeitprozesses einen Ausführungsstatus des Echtzeitprozesses sowie Eingangsparameter und Zustandsvariablen des Echtzeitprozesses.

Damit ist der Vorteil verbunden, dass der Echtzeitprozess an definierter Stelle beginnen kann und erforderlichenfalls nahtlos wieder abgebrochen werden kann. Damit kann der Echtzeitprozess beispielsweise auch geteilt werden und auf verschiedene Prozessoren ausgelagert werden.

Gemäß einer Ausführungsform des Verfahrens umfasst das Ausführen des Ausführungscodes durch das mobile Endgerät ein Starten des Echtzeitprozesses auf dem mobilen Endgerät, sofern der Echtzeitprozess auf dem mobilen Endgerät installiert ist; oder andernfalls ein Installieren des Echtzeitprozesses als ausführbare Datei auf dem mobilen Endgerät.

Damit ist der Vorteil erhöhter Flexibilität verbunden. Der Echtzeitprozess kann wahlweise auf dem mobilen Endgerät installiert sein oder als ausführbare Datei auf einem Server vorliegen, beispielsweise der Ausführungsentität oder der Serverentität des Slice.

Gemäß einem zweiten Aspekt betrifft die Erfindung ein 5G-Kommunikationsnetzwerk mit einer Mehrzahl von Slices, wobei ein erster Slice folgendes umfasst: eine Ausführungsentität zum Ausführen einer zeitkritischen elektronischen Anwendung, welche einen Echtzeitprozess aufweist, der innerhalb einer vorgegebenen Zeit ausgeführt werden muss; und eine Serverentität zum Allokieren und Steuern von Kommunikationsressourcen des ersten Slice zum Ausführen der zeitkritischen elektronischen Anwendung durch die Ausführungsentität, wobei die Serverentität ausgebildet ist, ansprechend auf eine Anfrage von einem mobilen Endgerät nach einer Ausführung der zeitkritischen elektronischen Anwendung, das mobile Endgerät als Ausführungsentität in den Slice des 5G-Kommunikationsnetzwerks einzubinden und einen Ausführungscode zum Ausführen des Echtzeitprozesses an das mobile Endgerät zu übertragen.

Damit ist der Vorteil verbunden, dass das mobile Endgerät für Echtzeit-Anwendungen als virtueller Knoten (Ausführungsentität) in eine oder in mehrere Slices verlagert werden kann. Dadurch können die Ressourcen des virtuellen Knotens für die Echtzeitanwendung verwendet werden und stehen unmittelbar dem mobilen Endgerät zur Verfügung. Das mobile Endgerät ist in den Slice eingebunden, so dass keine zeitkritische Datenübertragung von extern nach intern oder umgekehrt mehr erfolgen muss. Die elektronische Anwendung kann damit zeiteffizienter, d.h. schneller ausgeführt werden, so dass der Echtzeitprozess seine Zeitanforderungen erfüllen kann.

Gemäß einer Ausführungsform des 5G-Kommunikationsnetzwerks ist die Serverentität ausgebildet, beim Einbinden des mobilen Endgeräts in den Slice Kommunikationsressourcen auf dem mobilen Endgerät zum Ausführen des Echtzeitprozesses zu allokieren.

Damit ist der Vorteil verbunden, dass das mobile Endgerät eine Vielzahl von Ressourcen nutzen kann, seien es mehr anwenderorientierte Ressourcen des mobilen Endgeräts, wie beispielsweise Display oder mehr netzwerkseitige Ressourcen des Slice wie Server mit hoher Rechenleistung.

Gemäß einer Ausführungsform des 5G-Kommunikationsnetzwerks ist die Serverentität ausgebildet, beim Einbinden des mobilen Endgeräts in den Slice allokierte Kommunikationsressourcen des mobilen Endgeräts mit allokierten Kommunikationsressourcen des ersten Slice zum Ausführen des Echtzeitprozesses zu vernetzen.

Damit ist der Vorteil verbunden, dass durch die Vernetzung der Ressourcen eine Leistungssteigerung sowie Synergieeffekte erzielt werden können.

Gemäß einer Ausführungsform des 5G-Kommunikationsnetzwerks ist die Ausführungsentität ausgebildet, den Echtzeitprozess unter Nutzung der allokierten Kommunikationsressourcen des mobilen Endgeräts und der allokierten Kommunikationsressourcen des ersten Slice auszuführen.

Damit ist der Vorteil verbunden, dass der Echtzeitprozess besonders schnell ausgeführt werden kann, wenn das mobile Endgerät anwenderorientierte Ressourcen des mobilen Endgeräts und netzwerkseitige Ressourcen des Slice nutzen kann.

Gemäß einer Ausführungsform des 5G-Kommunikationsnetzwerks umfasst die Anfrage von dem mobilen Endgerät eine Zeitangabe, die angibt bis wann der Echtzeitprozess auf dem mobilen Kommunikationsgerät ausgeführt sein muss; und die Serverentität ist ausgebildet, die Kommunikationsressourcen des ersten Slice abhängig von der Zeitangabe zu allokieren.

Damit ist der Vorteil verbunden, dass der Slice darüber informiert wird, welche Zeitanforderungen für den Echtzeitprozess bestehen und der Slice die Kommunikationsressourcen maßgeschneidert zur Verfügung stellen kann. Damit wird eine effiziente Ausnutzung der Kommunikationsressourcen möglich.

Mit diesem 5G-Kommunikationsnetzwerk können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das 5G-Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 ein Ablaufdiagramm 300 zur Ausführung einer elektronischen Anwendung durch ein Subnetzwerk (Slice) 311 mit Serverentität (Controller) 312 und einem als Ausführungsentität in das Subnetz 311 eingebundenen mobilen Endgerät 310 gemäß einer beispielhaften Ausführungsform;
Fig. 4 eine schematische Darstellung eines Verfahrens 400 zum Ausführen einer elektronischen Anwendung durch ein Subnetzwerk gemäß einer beispielhaften Ausführungsform; und
Fig. 5 eine schematische Darstellung eines Kommunikationsnetzwerks 500 mit einer Mehrzahl von Subnetzwerken 501, 502, 503 und einem in ein erstes Subnetzwerk 501 eingebundenen mobilen Endgerät 510 gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

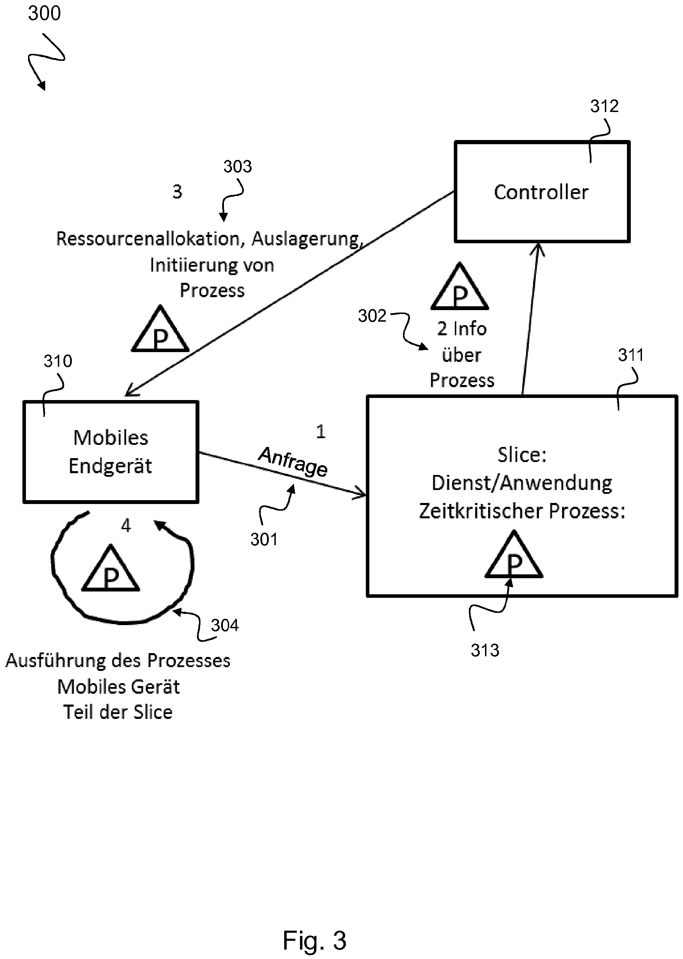

Fig. 3 zeigt ein Ablaufdiagramm 300 zur Ausführung einer elektronischen Anwendung durch ein Subnetzwerk (Slice) 311 mit Serverentität (Controller) 312 und einem als Ausführungsentität in das Subnetz 311 eingebundenen mobilen Endgerät 310 gemäß einer beispielhaften Ausführungsform.

In einem ersten Schritt "1" beansprucht ein mobiles Endgerät eine Slice-Anwendung oder einen Dienst, wie beispielsweise "Augmented Reality" zur Ausführung eines zeitkritischen Prozesses 313. Eine Anfrage 301 wird an einen Slice bzw. ein Subnetzwerk 311 eines Kommunikationsnetzwerks, beispielsweise eines 5G Kommunikationsnetzwerks 100, 200 wie oben zu den Figuren 1 und 2 beschrieben, gerichtet. In einem zweiten Schritt "2" werden zeitkritische (Teil)Prozesse der Slice-Anwendung bzw. des Slice-Dienstes entsprechend gekennzeichnet und vor Ausführung dem Controller 312 (z.B. einem Ressourcen-Manager) durch eine Funktion angezeigt 302. Der Controller 312 wird im Weiteren auch als Serverentität des Subnetzwerks bzw. der Slice 311 bezeichnet.

Das Protokoll zwischen Controller 312 und mobilem Endgerät 310 beginnt mit einem dritten Schritt "3" und umfasst die folgenden Abläufe: Zuerst bindet der Controller 312 das mobile Endgerät 310 in den Slice 311 ein und allokiert Ressourcen im mobilen Endgerät 310. Dann wird auf dem mobilen Endgerät eine Verarbeitungsumgebung bereitgestellt. Ist der Prozess 313 auf dem mobilen Endgerät 310 installiert, so wird dieser gestartet; andernfalls wird der Prozess 313 als ausführbare Datei auf dem mobilen Endgerät 310 installiert. Dann teilt der Controller 312 oder eine weitere Instanz dem Prozess 313 auf dem mobilen Endgerät 310 den Status der Anwendung und gegebenenfalls Eingangsdaten/Variablen mit.

In einem vierten Schritt "4" wird der Prozess 313 auf dem mobilen Endgerät 310 ausgeführt; und das Ergebnis des Prozesses 313 wird einer Anwendung (z.B Augmented Reality usw.) auf dem mobilen Endgerät 310 zur Verfügung gestellt.

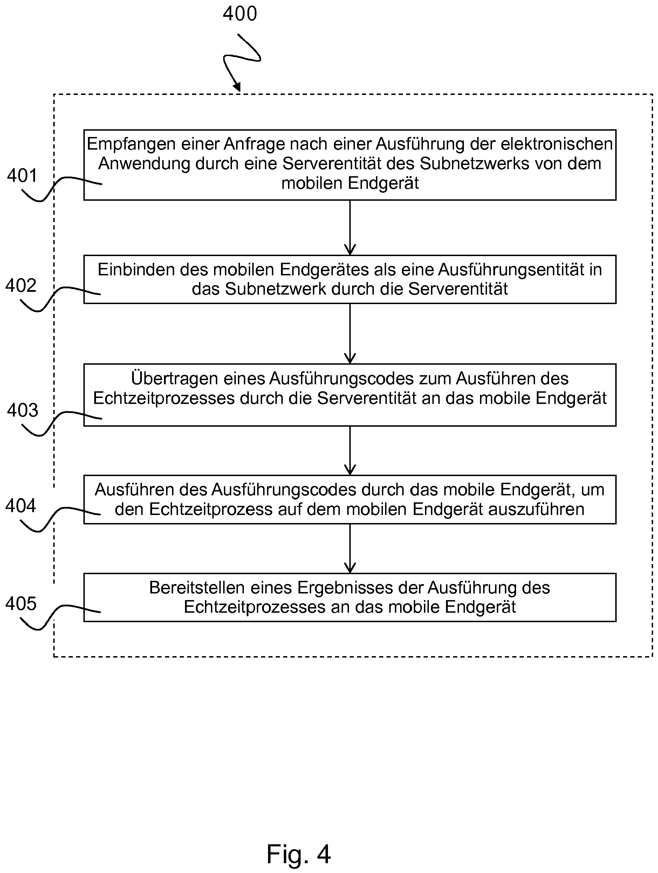

Fig. 4 zeigt eine schematische Darstellung eines Verfahrens 400 zum Ausführen einer elektronischen Anwendung durch ein Subnetzwerk gemäß einer beispielhaften Ausführungsform. Das Verfahren 400 wird bezugnehmend auf die Komponenten aus Figur 3 genauer beschrieben.

Das Verfahren 400 zum Ausführen einer elektronischen Anwendung durch ein Subnetzwerk eines Kommunikationsnetzwerks mit einer Mehrzahl von Subnetzwerken sowie einem mobilen Endgerät, wobei die elektronische Anwendung einen Echtzeitprozess aufweist, umfasst die im Folgenden dargestellten Schritte.

Das Verfahren 400 umfasst in einem ersten Schritt 401 ein Empfangen einer Anfrage 301 nach einer Ausführung der elektronischen Anwendung durch eine Serverentität 312 des Subnetzwerks 311 von dem mobilen Endgerät 310.

Das Verfahren 400 umfasst in einem zweiten Schritt 402 ein Einbinden des mobilen Endgerätes 310 als eine Ausführungsentität in das Subnetzwerk 311 durch die Serverentität 312.

Das Verfahren 400 umfasst in einem dritten Schritt 403 ein Übertragen eines Ausführungscodes zum Ausführen des Echtzeitprozesses 313 durch die Serverentität 312 an das mobile Endgerät 310.

Das Verfahren 400 umfasst in einem vierten Schritt 404 ein Ausführen des Ausführungscodes durch das mobile Endgerät 310, um den Echtzeitprozess 313 auf dem mobilen Endgerät 310 auszuführen.

Das Verfahren 400 umfasst in einem fünften Schritt 405 ein Bereitstellen eines Ergebnisses der Ausführung des Echtzeitprozesses 313 auf dem mobilen Endgerät 310.

Das Verfahren 400 kann ferner in einem weiteren Schritt ein Allokieren von Ressourcen 303 des Subnetzwerks 311 zur Ausführung der elektronischen Anwendung durch die Serverentität 312 des Subnetzwerks 311 umfassen.

Die Anfrage 301 nach der Ausführung der elektronischen Anwendung kann eine Zeitangabe umfassen, die angibt bis wann der Echtzeitprozess 313 auf dem mobilen Endgerät 310 ausgeführt sein muss. Bei zeitkritischen Prozessen kann dies eine Zeit sein, die zur Verfügung steht bis neue Daten eintreffen. Beispielsweise kann diese Zeit ein Abtastintervall angeben. Die Zeit kann eine absolute Zeit angeben oder ein Zeitintervall bezogen auf eine vorgegebene Zeit.

Das Allokieren von Ressourcen des Subnetzwerks 311 kann abhängig von der Zeitangabe erfolgen. So sollten bei besonders zeitkritischen Anwendungen mehr Ressourcen allokiert und genutzt werden, um durch Parallelisierung oder Rechenleistung die Aufgaben schneller ausführen zu können, als bei weniger zeitkritischen Anwendungen.

Das Verfahren 400 kann ferner in einem weiteren Schritt ein Allokieren von Ressourcen des Subnetzwerks 311 durch das mobile Endgerät 310 umfassen zum Ausführen des Echtzeitprozesses 313 auf dem mobilen Endgerät 310 unter Nutzung der allokierten Ressourcen des Subnetzwerks 311.

Das Verfahren 400 kann ferner in einem weiteren Schritt ein Allokieren von Ressourcen des mobilen Endgeräts 310 durch das mobile Endgerät 310 umfassen zum Ausführen des Echtzeitprozesses 313 auf dem mobilen Endgerät 310 unter Nutzung der allokierten Ressourcen des mobilen Endgeräts 310 und der allokierten Ressourcen des Subnetzwerks 311.

Das Verfahren 400 kann ferner in einem weiteren Schritt ein Vernetzen der allokierten Ressourcen des mobilen Endgeräts 310 mit den allokierten Ressourcen des Subnetzwerks 311 umfassen zum Ausführen des Echtzeitprozesses 313 auf dem mobilen Endgerät 310. Durch die Vernetzung kann eine optimale Nutzung der Ressourcen und Ausnutzung von Synergieeffekten erfolgen.

Der Ausführungscode zum Ausführen des Echtzeitprozesses 313 kann einen Ausführungsstatus des Echtzeitprozesses 313 sowie Eingangsparameter und Zustandsvariablen des Echtzeitprozesses 313 umfassen.

Das Ausführen 404 des Ausführungscodes durch das mobile Endgerät 310 kann ein Starten des Echtzeitprozesses 313 auf dem mobilen Endgerät 310 umfassen, sofern der Echtzeitprozess 313 auf dem mobilen Endgerät 310 installiert ist; oder andernfalls ein Installieren des Echtzeitprozesses 313 als ausführbare Datei auf dem mobilen Endgerät 310.

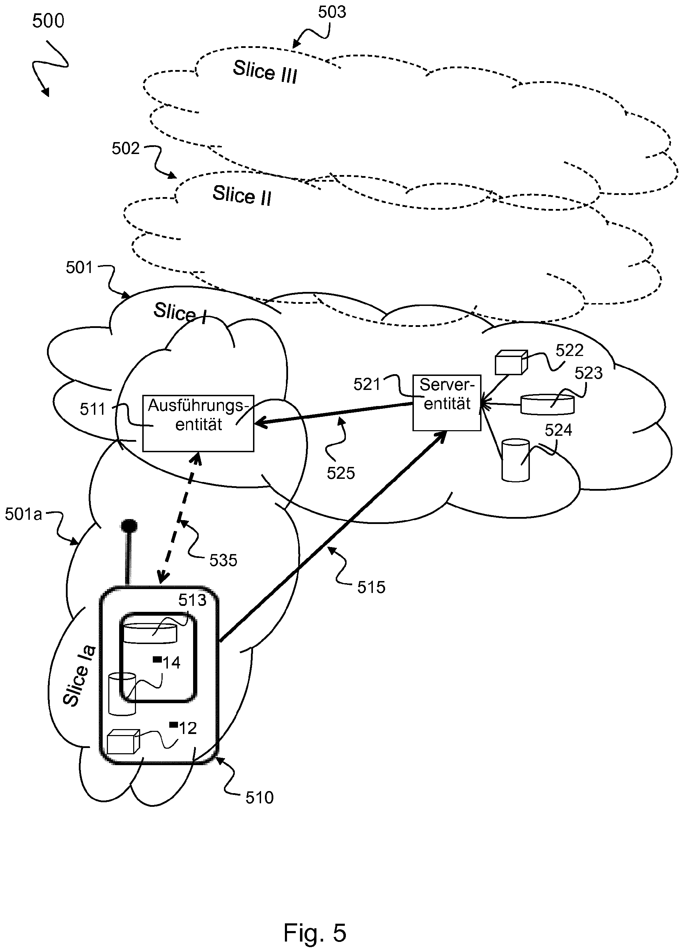

Fig. 5 zeigt eine schematische Darstellung eines Kommunikationsnetzwerks 500 mit einer Mehrzahl von Subnetzwerken 501, 502, 503 und einem in ein erstes Subnetzwerk 501 eingebundenes mobiles Endgerät 510 gemäß einer beispielhaften Ausführungsform. Das Kommunikationsnetzwerk kann beispielsweise einem der in Figuren 1 und 2 beschriebenen Kommunikationsnetze 100, 200 entsprechen.

Das Kommunikationsnetzwerk 500 umfasst eine Mehrzahl von Subnetzwerken 501, 502, 503. Ein erstes Subnetzwerk 501 umfasst eine Ausführungsentität 511 und eine Serverentität 521, beispielsweise entsprechend dem oben zu Figur 3 beschriebenen Controller 312. Die Ausführungsentität 511 führt eine elektronische Anwendung aus, welche einen Echtzeitprozess aufweist, beispielsweise einen Echtzeitprozess 313 wie oben zu Figur 3 beschrieben. Die elektronische Anwendung kann beispielsweise eine zeitkritische Anwendung sein, wie z.B. eine (verzögerungsreduzierte) Augmented Reality, eine Fahrzeugsteuerung bei Fahrzeugen, insbesondere bei autonomem Fahren, eine Life Science Anwendung wie beispielsweise Auswertung von Körpersensorwerten zur Krankheitsdiagnose oder für Trainingsoptimierung, u.v.a.m.

Die Serverentität 521 allokiert und steuert Kommunikationsressourcen 522, 523, 524 des ersten Subnetzwerks 501 zum Ausführen der elektronischen Anwendung durch die Ausführungsentität 511. Die Kommunikationsressourcen 522, 523, 524 können den oben zu Figur 2 beschriebenen Kommunikationsressourcen 231, 232, 233, 234, 235, 236, 237, 238, 239, 240 entsprechen.

Dabei ist die Serverentität 521 ausgebildet, ansprechend auf eine Anfrage 515 von einem mobilen Endgerät 510 nach einer Ausführung der elektronischen Anwendung, das mobile Endgerät 510 als Ausführungsentität 511 in das Subnetzwerk 501 einzubinden und einen Ausführungscode zum Ausführen des Echtzeitprozesses an das mobile Endgerät 511 zu übertragen. Das mobile Endgerät 511 kann dem mobilen Endgerät 310 gemäß Figur 3 entsprechen. Das Einbinden des mobilen Endgeräts 510 in das Subnetzwerk 501 ist schematisch durch das Erzeugen einer neuen Sub-Slice (Slice la) 501a dargestellt, welche sich bei der Ausführungsentität 511 mit der Slice I 501 überlappt. Dies zeigt, dass das mobile Endgerät 510 ein Teil der ersten Slice 501 wird.

Die Serverentität 521 kann beim Einbinden des mobilen Endgeräts 510 in das Subnetzwerk 501 Kommunikationsressourcen 512, 513, 514 auf dem mobilen Endgerät 510 zum Ausführen des Echtzeitprozesses allokieren.

Die Serverentität 521 kann beim Einbinden des mobilen Endgeräts 510 in das Subnetzwerk 501 allokierte Kommunikationsressourcen 512, 513, 514 des mobilen Endgeräts 510 zusammen oder selektiv mit allokierten Kommunikationsressourcen 522, 523, 524 des ersten Subnetzwerks 501 zum Ausführen des Echtzeitprozesses vernetzen.

Dann kann die Ausführungsentität 511 den Echtzeitprozess unter Nutzung der allokierten Kommunikationsressourcen 512, 513, 514 des mobilen Endgeräts 510 und der allokierten Kommunikationsressourcen 522, 523, 524 des ersten Subnetzwerks 501 ausführen.

Die Anfrage 515 von dem mobilen Endgerät 510 kann eine Zeitangabe umfassen, die angibt bis wann der Echtzeitprozess auf dem mobilen Endgerät ausgeführt sein muss, beispielsweise wie oben zu Figur 4 beschrieben. Die Serverentität 521 kann die Kommunikationsressourcen 522, 523, 524 des ersten Subnetzwerks 501 abhängig von der Zeitangabe allokieren, beispielsweise wie oben zu Figur 4 beschrieben.

Das Kommunikationsnetzwerk 500 kann beispielsweise ein Kommunikationssystem einer fünften Generation (5G) oder einer weiteren Generation sein, und die Subnetzwerke 501, 502, 503 können Slices des Kommunikationsnetzwerkes 500 sein, beispielsweise wie oben zu den Figuren 1 und 2 beschrieben.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 400 oder der zu Figur 3 beschriebene Prozessablauf ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 oder den Prozessablauf 300 auszuführen oder die Netzkomponenten der in den Figuren 1, 2 und 5 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste

- 300:: Ablaufdiagramm zur Ausführung einer elektronischen Anwendung durch ein Subnetzwerk
- 301:: Anfrage von mobilem Endgerät an Subnetz bzw. Slice
- 302:: Information über den Prozess von Slice an Controller
- 303:: Steuerung von Ressourcenallokation, Auslagerung, Initiierung des Prozesses
- 304:: Ausführung des Prozesses auf dem mobilen Endgerät als Teil der Slice
- 310:: mobiles Endgerät bzw. Kommunikationsgerät
- 311:: Slice bzw. Subnetzwerk
- 312:: Controller bzw. Serverentität
- 313:: Echtzeitprozess

- 400:: Verfahren zum Ausführen einer elektronischen Anwendung durch ein Subnetzwerk
- 401:: 1. Schritt: Empfangen einer Anfrage
- 402:: 2. Schritt: Einbinden des mobilen Endgerätes
- 403:: 3. Schritt: Übertragen eines Ausführungscodes
- 404:: 4. Schritt: Ausführen des Ausführungscodes
- 405:: 5. Schritt: Bereitstellen eines Ergebnisses

- 500:: Kommunikationsnetzwerk bzw. Kommunikationssystem
- 501:: erstes Subnetzwerk bzw. Slice I oder einfach Subnetzwerk
- 501a:: Erweiterung des ersten Subnetzwerks bzw. Slice la
- 502:: zweites Subnetzwerk bzw. Slice II
- 503:: drittes Subnetzwerk bzw. Slice III
- 510:: mobiles Endgerät bzw. mobiles Kommunikationsgerät,
- 511:: Ausführungsentität in Slice I
- 512, 513, 514:: Ressourcen des mobilen Endgeräts
- 521:: Serverentität in Slice I mit Netzwerkfunktion
- 522, 523, 524:: Netzwerkkomponenten, die der Serverentität mittels der Netzwerkfunktion zugewiesen werden
- 515:: Interface zwischen mobilem Endgerät und Serverentität
- 525:: Interface zwischen Serverentität und Ausführungsentität
- 535:: Interface zwischen mobilem Endgerät und Ausführungsentität

## Patentansprüche

1. Verfahren (400) zum Ausführen einer zeitkritischen elektronischen Anwendung durch einen Slice eines 5G Kommunikationsnetzwerks mit einer Mehrzahl von Slices sowie einem mobilen Endgerät, wobei die zeitkritische elektronische Anwendung einen Echtzeitprozess aufweist, der innerhalb einer vorgegebenen Zeit ausgeführt werden muss, mit:
Auswählen eines Slice (311) eines 5G Kommunikationsnetzwerks zum Ausführen der zeitkritischen elektronischen Anwendung;
Empfangen (401) einer Anfrage (301) nach einer Ausführung der zeitkritischen elektronischen Anwendung durch eine Serverentität (312) des Slice (311) von dem mobilen Endgerät (310);
Einbinden (402) des mobilen Endgerätes (310) als eine Ausführungsentität in den Slice (311) des 5G Kommunikationsnetzwerks durch die Serverentität (312);
Übertragen (403) eines Ausführungscodes zum Ausführen des Echtzeitprozesses (313) durch die Serverentität (312) an das mobile Endgerät (310);
Ausführen (404) des Ausführungscodes durch das mobile Endgerät (310), um den Echtzeitprozess (313) auf dem mobilen Endgerät (310) auszuführen; und
Bereitstellen (405) eines Ergebnisses der Ausführung des Echtzeitprozesses (313) auf dem mobilen Endgerät (310).

2. Verfahren (400) nach Anspruch 1, mit:
Allokieren von Ressourcen (303) des Slice (311) zur Ausführung der elektronischen Anwendung durch die Serverentität (312) des Subnetzwerks (311).

3. Verfahren (400) nach Anspruch 2,
wobei die Anfrage (301) nach der Ausführung der elektronischen Anwendung eine Zeitangabe umfasst, die angibt bis wann der Echtzeitprozess (313) auf dem mobilen Endgerät (310) ausgeführt sein muss.

4. Verfahren (400) nach Anspruch 3,
wobei das Allokieren von Ressourcen des Slice (311) abhängig von der Zeitangabe erfolgt.

5. Verfahren (400) nach einem der vorstehenden Ansprüche, mit:
Allokieren von Ressourcen des Slice (311) durch das mobile Endgerät (310) zum Ausführen des Echtzeitprozesses (313) auf dem mobilen Endgerät (310) unter Nutzung der allokierten Ressourcen des Slice (311).

6. Verfahren (400) nach Anspruch 5, mit:
Allokieren von Ressourcen des mobilen Endgeräts (310) durch das mobile Endgerät (310) zum Ausführen des Echtzeitprozesses (313) auf dem mobilen Endgerät (310) unter Nutzung der allokierten Ressourcen des mobilen Endgeräts (310) und der allokierten Ressourcen des Slice (311).

7. Verfahren (400) nach Anspruch 6, mit:
Vernetzen der allokierten Ressourcen des mobilen Endgeräts (310) mit den allokierten Ressourcen des Slice (311) zum Ausführen des Echtzeitprozesses (313) auf dem mobilen Endgerät (310).

8. Verfahren (400) nach einem der vorstehenden Ansprüche,
wobei der Ausführungscode zum Ausführen des Echtzeitprozesses (313) einen Ausführungsstatus des Echtzeitprozesses (313) sowie Eingangsparameter und Zustandsvariablen des Echtzeitprozesses (313) umfasst.

9. Verfahren (400) nach einem der vorstehenden Ansprüche,
wobei das Ausführen (404) des Ausführungscodes durch das mobile Endgerät (310) ein Starten des Echtzeitprozesses (313) auf dem mobilen Endgerät (310) umfasst, sofern der Echtzeitprozess (313) auf dem mobilen Endgerät (310) installiert ist; oder andernfalls:
ein Installieren des Echtzeitprozesses (313) als ausführbare Datei auf dem mobilen Endgerät (310).

10. 5G-Kommunikationsnetzwerk (500) mit einer Mehrzahl von Slices (501, 502, 503), wobei ein erster Slice (501) folgendes umfasst:
eine Ausführungsentität (511) zum Ausführen einer zeitkritischen elektronischen Anwendung, welche einen Echtzeitprozess aufweist, der innerhalb einer vorgegebenen Zeit ausgeführt werden muss; und
eine Serverentität (521) zum Allokieren und Steuern von Kommunikationsressourcen (522, 523, 524) des ersten Slice (501) zum Ausführen der zeitkritischen elektronischen Anwendung durch die Ausführungsentität (511),
wobei die Serverentität (521) ausgebildet ist, ansprechend auf eine Anfrage (515) von einem mobilen Endgerät (510) nach einer Ausführung der zeitkritischen elektronischen Anwendung, das mobile Endgerät (510) als Ausführungsentität (511) in den Slice (501) des 5G-Kommunikationsnetzwerks (500) einzubinden und einen Ausführungscode zum Ausführen des Echtzeitprozesses an das mobile Endgerät (511) zu übertragen.

11. 5G-Kommunikationsnetzwerk (500) nach Anspruch 10,
wobei die Serverentität (521) ausgebildet ist, beim Einbinden des mobilen Endgeräts (510) in den Slice (501) Kommunikationsressourcen (512, 513, 514) auf dem mobilen Endgerät (510) zum Ausführen des Echtzeitprozesses zu allokieren.

12. 5G-Kommunikationsnetzwerk (500) nach Anspruch 11,
wobei die Serverentität (521) ausgebildet ist, beim Einbinden des mobilen Endgeräts (510) in den Slice (501) allokierte Kommunikationsressourcen (512, 513, 514) des mobilen Endgeräts (510) mit allokierten Kommunikationsressourcen (522, 523, 524) des ersten Slice (501) zum Ausführen des Echtzeitprozesses zu vernetzen.

13. 5G-Kommunikationsnetzwerk (500) nach Anspruch 10 oder 11,
wobei die Ausführungsentität (511) ausgebildet ist, den Echtzeitprozess unter Nutzung der allokierten Kommunikationsressourcen (512, 513, 514) des mobilen Endgeräts (510) und der allokierten Kommunikationsressourcen (522, 523, 524) des ersten Slice (501) auszuführen.

14. 5G-Kommunikationsnetzwerk (500) nach Anspruch 12,
wobei die Anfrage (515) von dem mobilen Endgerät (510) eine Zeitangabe umfasst, die angibt bis wann der Echtzeitprozess auf dem mobilen Endgerät ausgeführt sein muss; und
wobei die Serverentität (521) ausgebildet ist, die Kommunikationsressourcen (522, 523, 524) des ersten Slice (501) abhängig von der Zeitangabe zu allokieren.

## Claims

1. A method (400) for executing a time-critical electronic application by a slice of a 5G communication network with a plurality of slices and a mobile terminal, wherein the time-critical electronic application comprises a real-time process which must be executed within a predetermined time, including:
Selecting a slice (311) of a 5G communication network for executing the time-critical electronic application;
Receiving (401) a request (301) for executing the time-critical electronic application by a server entity (312) of the slice (311) from the mobile terminal (310);
Integrating (402) the mobile terminal (310) as an execution entity into the slice (311) of the 5G communication network by the server entity (312);
Transmitting (403) an execution code for executing the real-time process (313) by the server entity (312) to the mobile terminal (310);
Executing (404) the execution code by the mobile terminal (310) to execute the real-time process (313) on the mobile terminal (310); and
Providing (405) a result of the execution of the real-time process (313) on the mobile terminal (310).

2. The method (400) according to claim 1, including:
Allocating resources (303) of the slice (311) for executing the electronic application by the server entity (312) of the subnetwork (311).

3. The method (400) according to claim 2,
wherein the request (301) for executing the electronic application includes a time which indicates by what time the real-time process (313) must have been executed on the mobile terminal (310).

4. The method (400) according to claim 3,
wherein resources of the slice (311) are allocated depending on the time indicated.

5. The method (400) according to any one of the preceding claims, including:
Allocating, by the mobile terminal (310), of resources of the slice (311) for executing the real-time process (313) on the mobile terminal (310) using said allocated resources of the slice (311).

6. The method (400) according to claim 5, including:
Allocating, by the mobile terminal (310), of resources of the mobile terminal (310) for executing the real-time process (313) on the mobile terminal (310) using said allocated resources of the mobile terminal (310) and said allocated resources of the slice (311).

7. The method (400) according to claim 6, including:
Cross-linking the allocated resources of the mobile terminal (310) and the allocated resources of the slice (311) for executing the real-time process (313) on the mobile terminal (310) .

8. The method (400) according to any one of the preceding claims,
wherein the execution code for executing the real-time process (313) includes an execution status of the real-time process (313) as well as input parameters and status variables of the real-time process (313).

9. The method (400) according to any one of the preceding claims,
wherein executing (404) the execution code by the mobile terminal (310) includes launching the real-time process (313) on the mobile terminal (310), if the real-time process (313) is installed on the mobile terminal (310), or otherwise:
Installing the real-time process (313) as an executable file on the mobile terminal (310).

10. A 5G communication network (500) with a plurality of slices (501, 502, 503), wherein a first slice (501) includes the following:
an execution entity (511) for executing a time-critical electronic application, which comprises a real-time process which must be executed within a predetermined time; and
a server entity (521) for allocating and controlling communication resources (522, 523, 524) of the first slice (501) for executing the time-critical electronic application by the execution entity (511),
wherein the server entity (521) is configured, in response to a request (515) from a mobile terminal (510) for executing the time-critical electronic application, to integrate the mobile terminal (510) as execution entity (511) into the slice (501) of the 5G communication network (500) and to transmit an execution code for executing the real-time process to the mobile terminal (511).

11. The 5G communication network (500) according to claim 10, wherein the server entity (521) is configured, when integrating the mobile terminal (510) into the slice (501), to allocate communication resources (512, 513, 514) on the mobile terminal (510) for executing the real-time process.

12. The 5G communication network (500) according to claim 11, wherein the server entity (521) is configured, when integrating the mobile terminal (510) into the slice (501), to cross-link allocated communication resources (512, 513, 514) of the mobile terminal (510) with allocated communication resources (522, 523, 524) of the first slice (501) for executing the real-time process.

13. The 5G communication network (500) according to claim 10 or 11,
wherein the execution entity (511) is configured to execute the real-time process using the allocated communication resources (512, 513, 514) of the mobile terminal (510) and the allocated communication resources (522, 523, 524) of the first slice (501).

14. The 5G communication network (500) according to claim 12,
wherein the request (515) from the mobile terminal (510) includes a time which indicates by what time the real-time process must have been executed on the mobile terminal; and wherein the server entity (521) is configured to allocate the communication resources (522, 523, 524) of the first slice (501) depending on the time indicated.

## Revendications

1. Procédé (400) destiné à exécuter une application électronique sensible au facteur temps par une tranche d'un réseau de communication 5G avec une multitude de tranches ainsi qu'un terminal mobile, l'application électronique sensible au facteur temps présentant un processus en temps réel, qui doit être exécuté dans un temps déterminé, avec :
sélection d'une tranche (311) d'un réseau de communication 5G destiné à exécuter l'application électronique sensible au facteur temps ;
réception (401) d'une demande (301) après une exécution de l'application électronique sensible au facteur temps par une entité de serveur (312) de la tranche (311) du terminal mobile (310) ;
intégration (402) du terminal mobile (310) en tant qu'entité d'exécution dans la tranche (311) du réseau de communication 5G par l'entité de serveur (312) ;
transfert (403) d'un code d'exécution au terminal mobile (310) par l'entité de serveur (312) en vue d'exécuter un processus en temps réel (313) ;
exécution (404) du code d'exécution par le terminal mobile (310) afin d'exécuter le processus en temps réel (313) sur le terminal mobile (310) ; et
mise à disposition (405) d'un résultat de l'exécution du processus en temps réel (313) sur le terminal mobile (310).

2. Procédé (400) selon la revendication 1, avec :
allocation de ressources (303) de la tranche (311) destinée à exécuter l'application électroniques par l'entité de serveur (312) du sous-réseau (311).

3. Procédé (400) selon la revendication 2,
la demande (301) d'exécution de l'application électronique comprenant une durée, qui indique jusque quand le processus en temps réel (313) doit être exécuté sur le terminal mobile (310).

4. Procédé (400) selon la revendication 3,
l'allocation de ressources de la tranche (311) étant effectuée en fonction de la durée.

5. Procédé (400) selon l'une quelconque des revendications précédentes, avec :
allocation de ressources de la tranche (311) par le terminal mobile (310) destinée à exécuter le processus en temps réel (313) sur le terminal mobile (310) en utilisant les ressources allouées de la tranche (311).

6. Procédé (400) selon la revendication 5, avec :
allocation de ressources du terminal mobile (310) par le terminal mobile (310) destinée à exécuter le processus en temps réel (313) sur le terminal mobile (310) en utilisant les ressources allouées du terminal mobile (310) et les ressources allouées de la tranche (311).

7. Procédé (400) selon la revendication 6, avec :
mise en réseau des ressources allouées du terminal mobile (310) avec les ressources allouées de la tranche (311) destinée à exécuter le processus en temps réel (313) sur le terminal mobile (310).

8. Procédé (400) selon l'une quelconque des revendications précédentes,
le code d'exécution destiné à exécuter le processus en temps réel (313) comprenant un état d'exécution du processus en temps réel (313) ainsi que des paramètres d'entrée et variables d'état du processus en temps réel (313).

9. Procédé (400) selon l'une quelconque des revendications précédentes,
l'exécution (404) du code d'exécution comprenant un démarrage du processus en temps réel (313) sur le terminal mobile (310) par le terminal mobile (310) dans la mesure où le processus en temps réel (313) est installé sur le terminal mobile (310) ; ou bien :
une installation du processus en temps réel (313) sur le terminal mobile (310) comme un fichier exécutable.

10. Réseau de communication 5G (500) avec une multitude de tranches (501, 502, 503), une tranche (501) comprenant ce qui suit :
une entité d'exécution (511) destinée à exécuter une application électronique sensible au facteur temps, qui présente un processus en temps réel devant être exécuté en un temps prédéterminé ; et
une entité de serveur (521) destinée à allouer et commander des ressources de communication (522, 523, 524) de la première tranche (501) pour exécuter l'application électronique sensible au facteur temps par l'entité d'exécution (511),
l'entité de serveur (521) étant formée selon une exécution d'une application électronique sensible au facteur temps suivant une demande (515) d'un terminal mobile (510) d'intégration du terminal mobile (510) en tant qu'entité d'exécution (511) dans la tranche (501) du réseau de communication 5G (500) et de transfert d'un code d'exécution destiné à exécuter le processus en temps réel au terminal mobile (511).

11. Réseau de communication 5 G (500) selon la revendication 10,
l'entité de serveur (521) étant formée pour allouer des ressources de communication (512, 513, 514) sur le terminal mobile (510) en vue d'exécuter le processus en temps réel en intégrant le terminal mobile (510) dans la tranche (501).

12. Réseau de communication 5 G (500) selon la revendication 11,
l'entité de serveur (521) étant formée pour mettre en réseau des ressources de communication (512, 513, 514) allouées du terminal mobile (510) avec des ressources de communication (522, 523, 524) allouées de la première tranche (501) en vue d'exécuter le processus en temps réel en intégrant le terminal mobile (510) dans la tranche (501).

13. Réseau de communication 5 G (500) selon la revendication 10 ou 11,
l'entité d'exécution (511) étant formée pour exécuter le processus en temps réel en utilisant les ressources de communication (512, 513, 514) allouées du terminal mobile (510) et les ressources de communication (522, 523, 524) allouées de la première tranche (501).

14. Réseau de communication 5 G (500) selon la revendication 12,
la demande (515) du terminal mobile (510) comprenant une durée qui indique jusque quand le processus en temps réel doit être exécuté sur le terminal mobile ; et
l'entité de serveur (521) étant formée pour allouer les ressources de communication (522, 523, 524) de la première tranche (501) en fonction de la durée.
